# EUROPEAN PATENT SPECIFICATION

(11) **EP 3 329 973 B1**
(45) Date of publication and mention of the grant of the patent: **24.06.2020**
(21) Application number: 16750191.5
(22) Date of filing: 08.07.2016
(51) Int. Cl.: A63B 71/12, A41D 13/015, A41D 31/00, A42B 3/12, A41D 13/05, B32B 3/18, A41D 27/28

(54) **SHIN PROTECTION ELEMENT AND PROTECTION ASSEMBLY FOR CYCLISTS**
SCHIENBEIN-SCHUTZELEMENT UND SCHUTZANORDNUNG FÜR RADFAHRER
ÉLÉMENT DE PROTECTION POUR LE TIBIA ET ENSEMBLE DE PROTECTION POUR CYCLISTES

(30) Priority: 15.07.2015 ES 201500498 U; 18.03.2016 ES 201600197 U
(43) Date of publication of application: 06.06.2018
(73) Proprietor: Global Flow S.L., 08289 Copons - Barcelona (ES)
(72) Inventor: REIXACHS FERRER, Pau, 08289 Copons - Barecelona (ES)
(74) Representative: Balder IP Law, S.L.
(86) International application number: PCT/ES2016/070518
(87) International publication number: WO 2017/009508

(56) References cited:
- EP-A1- 0 600 584
- WO-A1-2006/092551
- US-A- 1 772 922

## Description

### TECHNICAL FIELD

The presented product invention refers to a protection element for the shin, which simultaneously allows optimum protection and allows for perspiration. It also refers to a protection set for cyclists that provides improved attachment method to the cyclist's leg, both in normal pedalling conditions and in the case of an accident. It also provides for optimum heat dissipation and perspiration and its structure facilitates its placement and adaptation to different pedalling conditions.

### BACKGROUND OF THE INVENTION

The present invention is related to the field of protection elements for shin, of the type comprising a protective body having a C-shaped cross section destined to cover the shin, three sections being defined in the protective body, a lower section destined to be in the vicinity of the ankle, a central section destined to face the shin and an upper section destined to be placed below the knee, the protective body is provided with a padded interior lining on the interior surface of the protective body.

In this element, padded lining means a material much more flexible than the material of the protective body, hardness of which will typically be higher than 80 Shore.

Specifically, the invention is intended as a protection for cyclists, and especially for the practice of mountain biking sport disciplines like All-mountain, Enduro and Downhill.

A desirable feature in this type of protection is its ability to provide adequate heat dissipation.

The aforementioned sports involve a high level of perspiration which is distributed throughout the body, but in the case of cyclists is especially high on the legs, even in the shins, both in the front and in the back.

The front of the shin is an area of intense perspiration, but the inventor has found that paradoxically shins are fully covered with traditional protections, with padded lining that prevents adequate heat dissipation.

Therefore, from this viewpoint, the inventor considers that the prior art solutions are not optimal.

Traditional protection sets are composed by a shin guard, a knee pad and a sleeve for the leg.

In general, both the shin and the knee pads are provided and are hinged together. In the known sets, the sleeve consists of a tubular sleeve that is placed above or below the knee pad, and which can also partially cover the shin guard.

These specific shin guard sets are provided with a three strips anchor that attach the top of the protection set with a textile element, in this case as a garter belt, arranged above the legs. These textile elements are in turn attached to a garment, which can be subjected by the waist, or even a jumpsuit style garment. Thus the traction is transmitted along the body, preventing the protective element from sliding down.

Although satisfactory, this structure is not optimal since the pedalling motion can be uncomfortable for the cyclist, for it involves many elements and the knee pad is forced to move with respect to the knee.

KR101377421, US2012255096, USD284038, US2982968, US5732411 or US6393610 documents disclose knee pad/ shin guard sets, but they are not optimal for cyclists.

WO2006/092551A1 discloses a protective clothing for providing protection from blows. US1772922A discloses a guard for protecting portions of a body from bruising or other injuries. EP0600584A1 discloses a body part protector.

### DESCRIPTION OF THE INVENTION

To overcome the art drawbacks of the current designs, according to a first aspect, the present invention proposes a protection element for the shin, comprising a protective body having a C-shaped cross section destined to cover the shin or the forearm, three sections being defined in the protective body, a lower section destined to be in the vicinity of the ankle, a central section destined to face the shin and an upper section destined to be placed below the knee, the protective body being provided with a padded interior lining on the interior surface of the protective body, wherein the lining is formed by a first lining section arranged in the lower section and a second lining section arranged in the upper section, the central section being devoid of interior lining, such that the protective body rests on the shin or forearm only in said lower section and in said upper section. The protective body is made of a transparent or translucent material.

Thus, the front part of the shin has an air chamber located in front, which can be ventilated efficiently because it faces the air streams, with the effect that perspiration will be reduced.

In addition, it significantly increases the comfort of the cyclist, who will not feel the shin imprisoned.

Preferably, the protection element comprises an upper extension articulated with the upper end of the protective body, the aforementioned extension has the shape of a spherical cap section destined to cover the knee. Preferably, the connection between the parts can be carried out providing that the second lining section extends upwardly and is attached to the lower interior surface of the cap to protect the knee.

More preferably, the protective body comprises frontal ventilation openings. Thus, it is possible to effectively ventilate the air chamber formed between the protective body and the shin, using the air movement created by the motion of the cyclist.

Advantageously, the protective body comprises at its corners openings to be attached by straps. The lower end strap can be directly sewn at its lower end to the protective body, with the upper end attached with the use of a Velcro™, the complementary part of which is directly arranged on the external surface of the protective body., The upper strap will preferably be attached with a Velcro™ on both ends, the Velcro™ complementary parts will be arranged on the upper part of the protective body.

The protective body material is polyethylene, although any other plastic material to ensure adequate hardness may be used.

The lining is a cross-linked plastic material or a piece of foam. The crosslinking can be square, diamond-shaped, or honeycomb shaped. A configuration that facilitates maximum perspiration and minimum skin contact and absorption properties is preferable. Ideally the lining openings will match the protective body openings.

Also, which may constitute an invention in itself, the second lining section is adhered by its surface, opposite to the contact surface with the user, to an elastic sheet which elastic constant is lower than the one of the lining and higher than the one of the protective body, this elastic sheet being joined to the protective body in its lower part and in the C-section ends, such that in distended conditions, there is a space between the sheet and the protective body.

Furthermore, it is common in the event of a crash that the protection elements of the present invention will disengage from the leg due to friction with the ground at high speed, causing the protection element to be dragged towards the feet, leaving the knee uncovered and exposed to harsh terrain elements such as rocks. In these cases the injuries could be significant. To avoid this, the present protective element may be optionally provided with means to hold it in its proper place on the leg. These means can consist of straps that run from the top of the protection element towards the upper body.

Another possibility is to have, in the lower part of the protection element, rods substantially U-shaped, so that the legs of the U are fitted in guides externally bonded to the body of the protection element, and the bottom of the U can lean on the top of the instep, preferably on the footwear. The support need not be permanent, but only occur when a slight displacement of the protection element occurs, so as not to obstruct the pedalling, but being effective in case of a fall.

According to a second aspect, the present invention proposes a protection set for cyclists, comprising a shin guard, a kneepad and a sleeve for the leg, the shin guard and the knee pad being joined and articulated together, comprising joining means between the shin guard and the sleeve and joining means between the knee pad and the sleeve, wherein the joining means between the shin guard and the sleeve and the joining means between the knee pad and the sleeve are removable, and wherein the joining means between the knee pad and the sleeve are, at least, two straps joined by one of its ends to the sleeve and by the other of its ends to the knee pad and wherein the connection between the two straps and the knee pad is arranged in the lateral topsides of the knee pad.

In some embodiments, the straps are elastic bands.

In some embodiments, the fixing between the straps and the sleeve are Velcro™.

In some embodiments, the fixing between the straps and the knee pad are pressure buttons or Velcro™.

In some embodiments, the fixing between the straps and the knee pad are hooks or protrusions.

In some embodiments, the fixing between the straps and the knee pad are Boa Closure System type (trademark), which is with a rotating knob, as disclosed in document US3197155 A.

In some embodiments, the connections between the two straps and the sleeve are arranged in the part of the sleeve corresponding to the sides of the lower part of the thigh.

In some embodiments, the articulated connection between the shin guard and the knee pad is formed by a pad made of plastic material.

In some embodiments, the articulated connection between the shin guard and the knee pad has a flexible tab joined by its lower part of the knee pad, this flexible tab is provided with joining means to the pad.

In some embodiments, the pad is formed by a plastic sheet provided in one side with cylindrical or frusto-conical protrusions, in the opposite side with bumps, being the bumps and the protrusions arranged coincidentally, such that its two ends are communicated through ventilation channels.

In some embodiments, the inlet of the channels on the side of the bumps is widened.

In some embodiments, the sheet is provided with through holes in the zones devoid of protrusions and bumps.

In some embodiments, the knee pad comprises a body with a cap form provided with a peripheral support zone destined to be in contact with the zone of the leg which surrounds the knee, and a central zone arranged in front of the knee, wherein the central zone projects outwards, being the transition zone between both zones formed by a step.

In some embodiments, the knee pad is provided with ventilation openings.

In some embodiments, the knee pad comprises, in its lateral topside ends, tabs for connection to the straps.

In some embodiments, the sleeve is formed by a tubular part and a lower extension shaped as an inverted T, such that two fixing wings are configured on the shin guard.

In some embodiments, the shin guard is provided in its upper external part with two recesses.

In some embodiments the set comprises Velcro™ complementary parts in the fixing wings and in the recesses.

In some embodiments the set comprises, in the upper opening of the sleeve and in its inner part, a non-slip strip and adjusting means of the strip to the leg.

In some embodiments the set comprises an upper band and a lower band for fixing the shin guard to the shin.

In some embodiments, the fixing of the upper band is made with Velcro™ in the recesses.

### BRIEF DESCRIPTION OF THE DRAWINGS

For a better understanding of what has been outlined, some drawings are attached in which, schematically and solely by way of a non-limiting example, a practical embodiment of the protection element of the invention is shown.
FIG. 1 is a perspective view of the protection element of the invention.
FIG. 2 is a perspective view from above of the protection element.
FIG. 3 is a section taken from a medium plane that allows to see the arrangement in the ends of the pads or padded linings.
FIG. 4 is a view analogous to FIG. 3, but placed on a leg.
FIGS. 5 and 6 are frontal and lateral side views respectively.
FIG. 7 shows an embodiment wherein the superior pad extends upwardly to form the link with a second protection body for the knee.
FIGS. 8 and 9 show the arrangement of the anchor straps of the protection element to the upper part of the legs.
FIG. 10 shows a way for joining the upper pad through a flexible element joined to the interior sides of the protective body, such that an impact absorption "arc" is formed.
FIG. 11 is a perspective view of the protection set according to a second aspect of the invention when it is fitted to a leg.
FIG. 12 shows a perspective view of the protection set.
FIG. 13 shows the subset formed by the shin guard and the knee pad.
FIG. 14 shows the first placement step of the set, that is the placement of the sleeve on the leg.
FIG. 15 shows the knee pad isolated.
FIG. 16 shows the impact absorption and articulation pad that internally covers the knee pad and which is joined by its lower part to the shin guard.
FIG. 17 is a perspective view of the shin guard isolated.
FIG. 18 shows an upper view of the pad.
FIG. 19 is a section of the pad.
FIG. 20 is a perspective view of the pad from the side in contact with the knee pad, where the impact absorption cylinders are located.
FIG. 21 is a perspective view of the pad from the side in contact with the knee of the cyclist, that is, from the side provided with bumps.
FIG. 22 is a perspective view with a medium cut of the pad.
FIG. 23 is a perspective view of the sleeve, in particular with the fixing wings or tabs to the shin guard in its lower part.

### DESCRIPTION OF A PREFERRED EMBODIMENT OF THE INVENTION

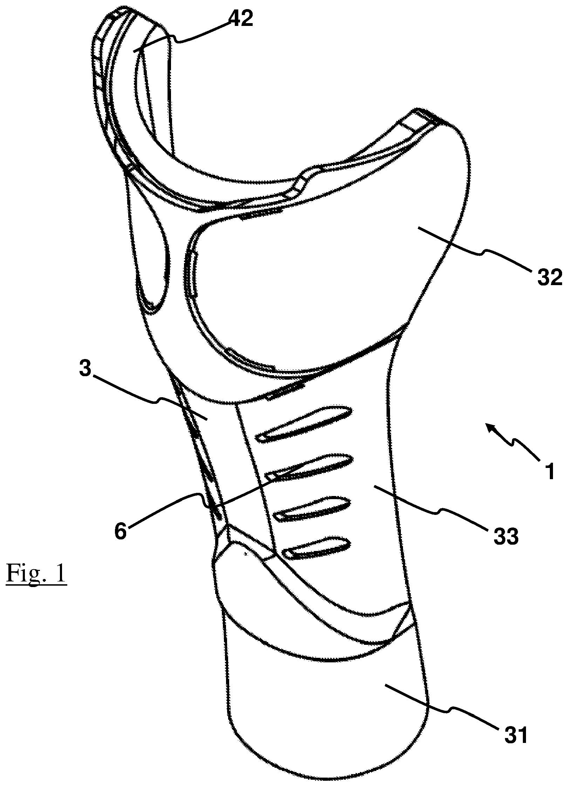

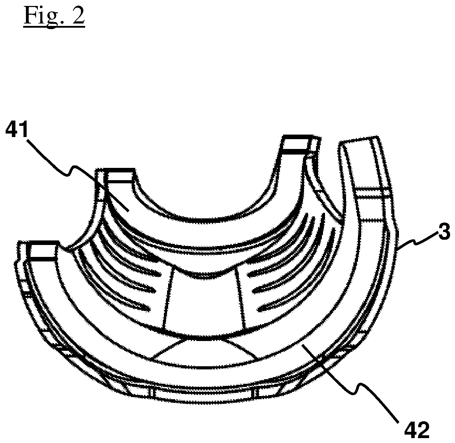

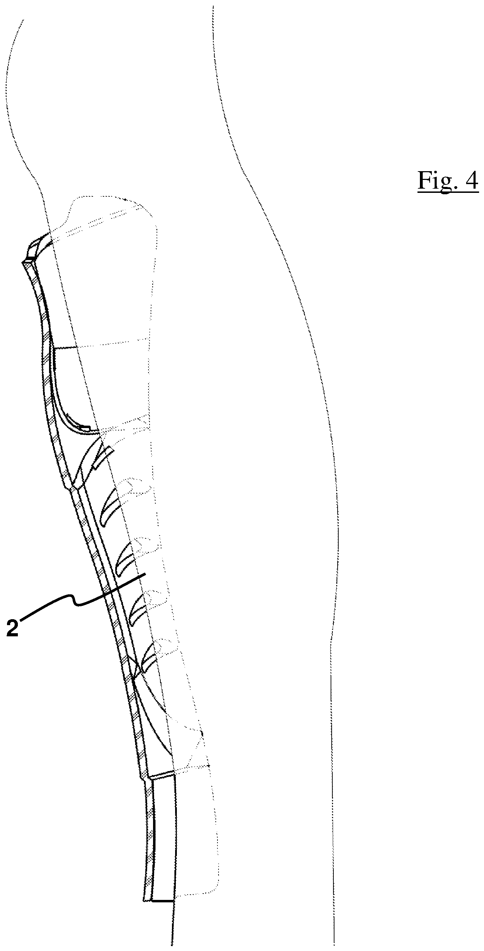

As shown in FIGS. 1 to 10, the invention relates, according to a first aspect, to a protection element 1 for shin 2, comprising a protective body 3 having a C-shaped cross section destined to cover the shin 2 or the forearm, three sections in the protective body 3 being defined, a lower section 31 destined to be in the vicinity of the ankle, a central section 33 destined to face the shin and an upper section 32 destined to be placed below the knee, the protective body 3 being provided with a padded interior lining 41, 42 on the interior surface of the protective body 3.

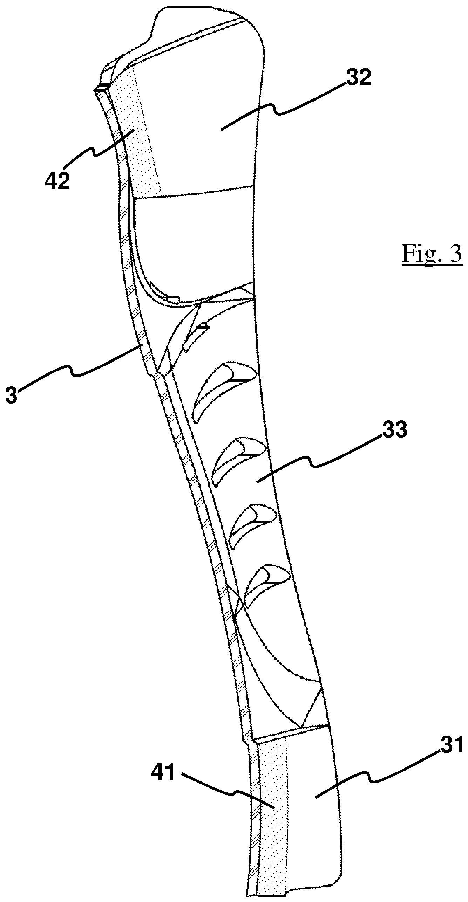

This features being already known, according to the present invention, and as shown in FIG. 3 for example, the lining 41, 42 is formed by a first lining section 41 arranged in the lower section 31 and a second lining section 42 arranged in the upper section 32, the central section 33 being devoid of interior lining, such that the protective body 3 rests on the shin or forearm only in said lower section 31 and in said upper section 32.

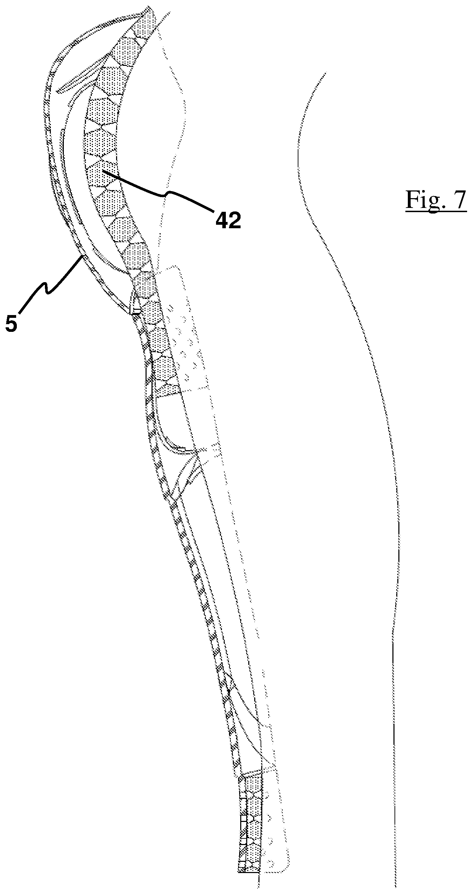

As shown in FIG. 7, the protection element comprises an upper extension 5 articulated with the upper end of the protective body 3, said extension has the shape of a spherical cap section destined to cover the knee.

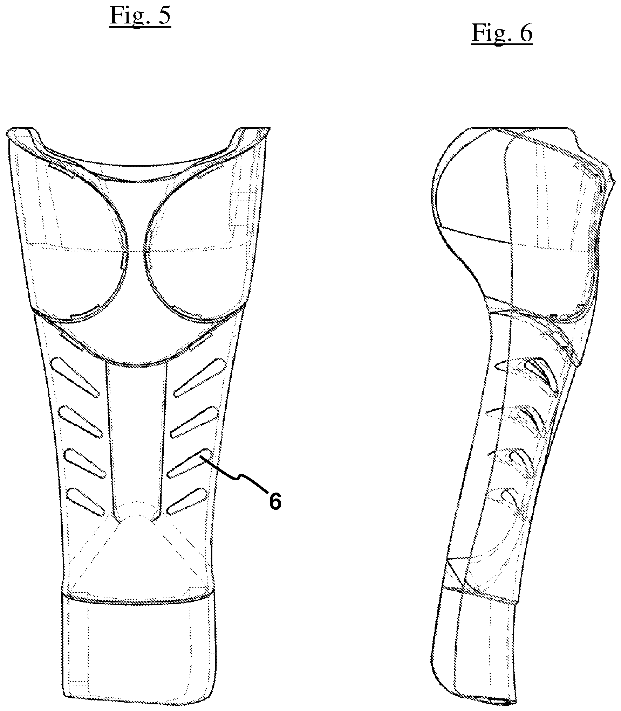

As shown for example in FIG. 5, the protective body 3 comprises ventilation openings 6 that allow increasing the heat dissipation speed between the protective body and the shin.

The protective body 3 comprises at its corners openings (not represented) for fixing by strips.

The protective body material 3 is polyethylene, with a high hardness.

Regarding the lining 41, 42, it can be a cross-linked plastic material or foam.

Very advantageously, the protective body 3 is made of a transparent or translucent material.

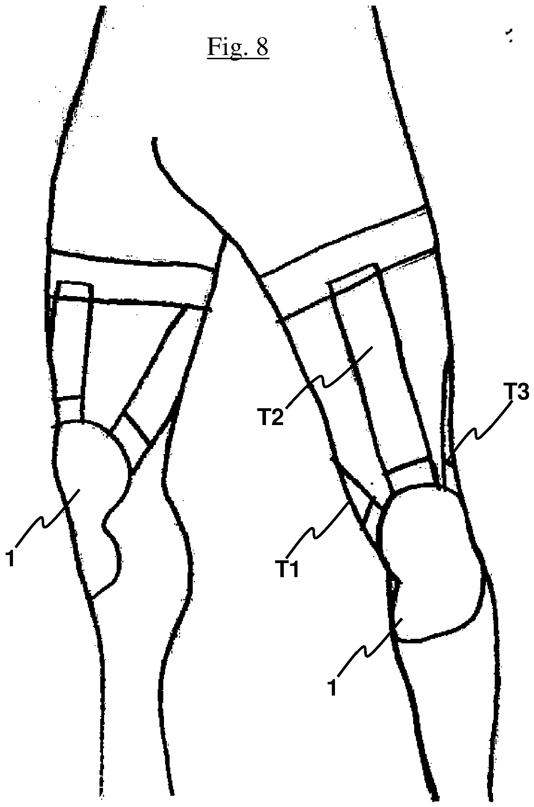

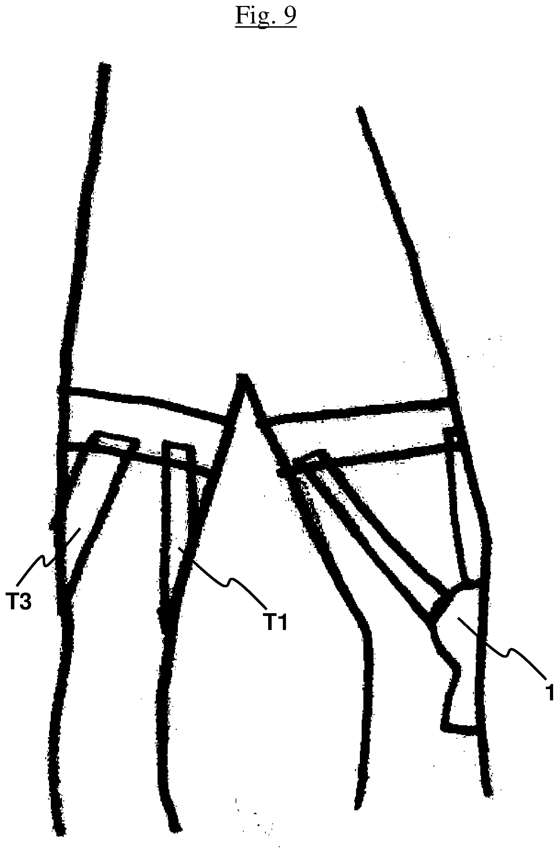

As shown in FIGS. 8 and 9, the invention includes an anchoring mode of the protection element based on three bands T1, T2, T3 that join the upper part of the protection element with a textile element, in this case like a suspender, arranged above the legs. In turn, these textile elements are joined to a garment, which can be fixed by the waist, or even in a jumpsuit style garment. In such a way the traction is transmitted all along the body, thus preventing the protection element from slipping down.

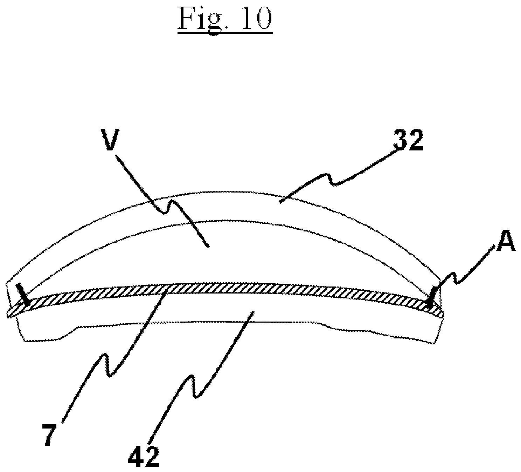

Finally, and as shown in the schematic section of FIG. 10, the second lining section 42 is adhered by its surface opposite to the contact surface with the user to an elastic sheet 7 having an elastic constant lower than the lining 41, 42 and higher than the one of the protective body 3, this elastic sheet 7 being joined to the protective body 3 in the lower part and in the C-section ends, such that in distended conditions, there is a space V between the sheet and the protective body 3. This feature forms an invention by itself, such that it can be applied to other sorts of shin guards, not necessarily in those with double support as claimed in the present invention.

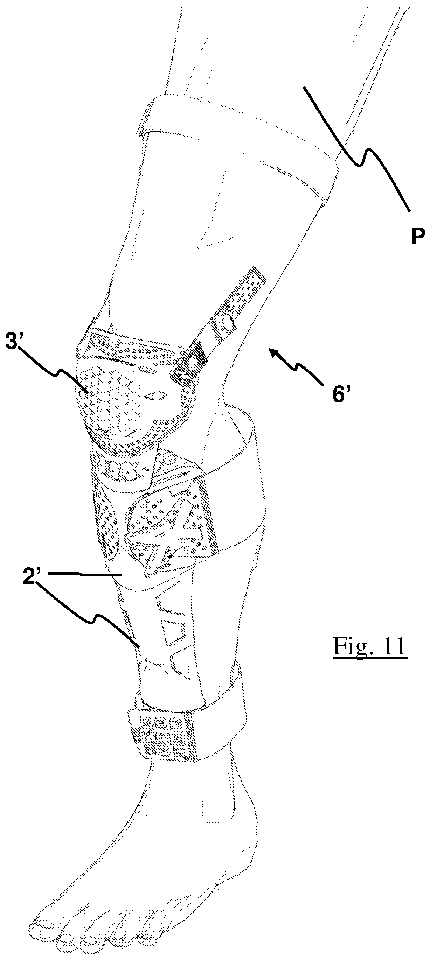

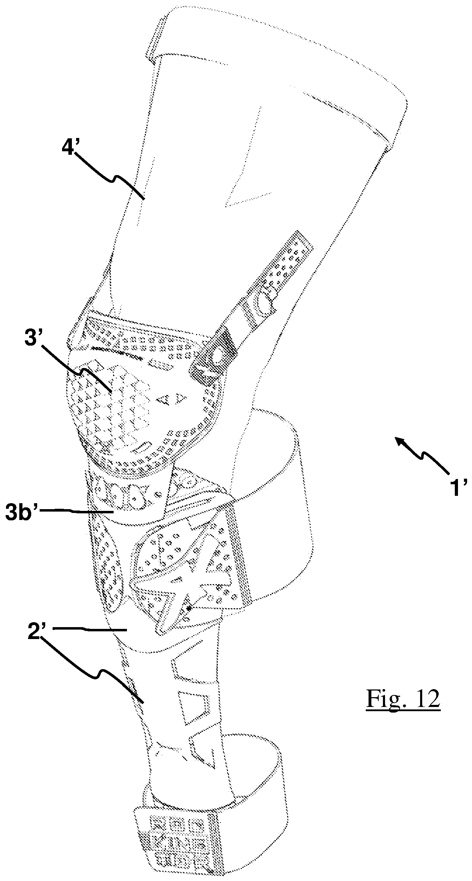

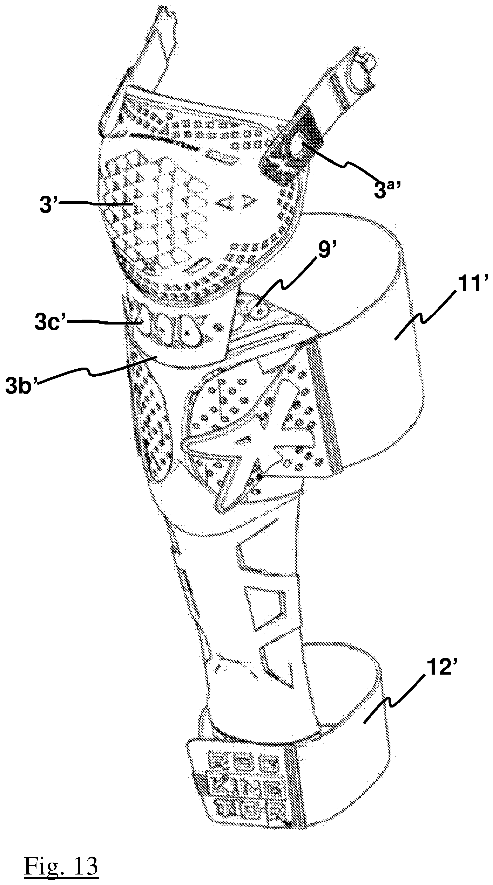

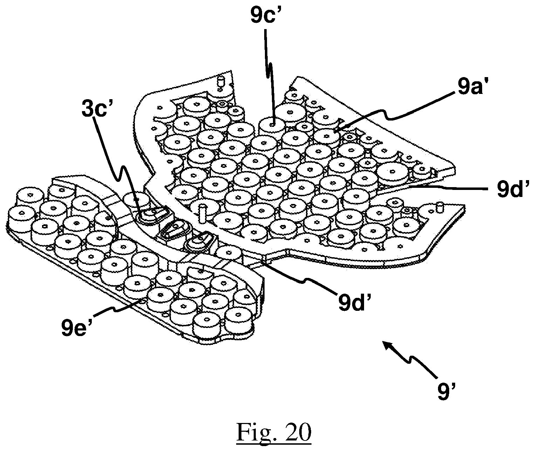

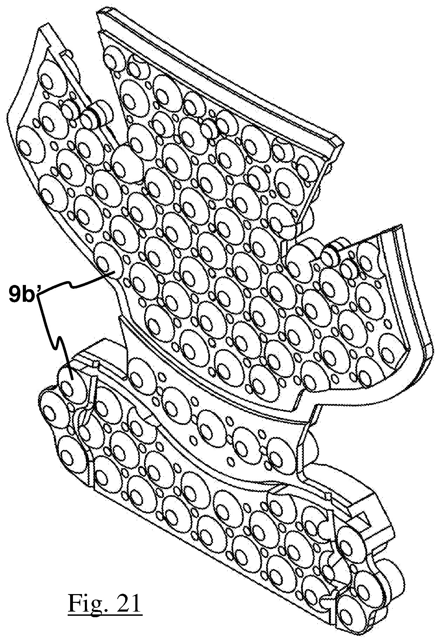

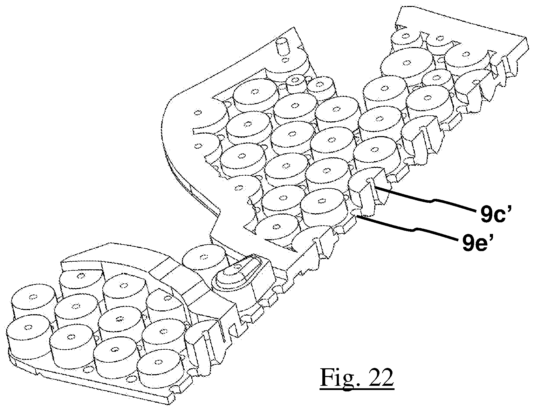

As shown in FIGS. 11 to 23, the invention also relates to a protection set 1' for cyclists P, comprising a shin guard 2', a knee pad 3' and a sleeve 4' for the leg P.

As known in the known prior art, the shin guard 2' and the knee pad 3' are joined and articulated together, and the set comprises joining means 5a', 5b' between the shin guard 2' and the sleeve 4' and joining means 6' between the knee pad 3' and the sleeve 4'.

The joining means 5a', 5b' between the shin guard 2' and the sleeve 4' and the joining means 6' between the knee pad 3' and the sleeve 4' are removable, and the joining means 6' between the knee pad 3' and the sleeve 4' are at least two straps 7', 8' joined by one of its ends to the sleeve 4' and by the other one of its ends to the knee pad 3'.

Since the joining means 5a', 5b' between the shin guard 2' and the sleeve 4' and the joining means 6' between the knee pad 3' and the sleeve 4' are removable, the placement of the protection is highly simplified. First the sleeve is placed, then the sleeve is attached to the shin guard, and finally the straps are joined, adjusting them. If, for example, in some moment of a bike ride the connection between sleeve and knee pad is not necessary, the cyclist just has to unfasten the straps 7', 8' and thus increase the perspirability.

Another advantage of the protection is that it is possible to replace some of its broken components without discarding the rest. This is the case of the sleeve, which is more susceptible to tears. It also allows to gradually replace used components by customised or latest versions of these components.

The connection between the two straps 7', 8' and the knee pad 3' is arranged in the lateral topsides of the knee pad 3'. A knee pad 3', as illustrated, is constituted by a cap normally approximately having spherical shape in which a lower side faces the shin, an upper side faces the front of the thigh, and wherein two lateral sides are defined. Therefore, it should be understood by lateral topsides the area common to the upper side and the lateral sides. These lateral topsides are the ideal place for anchoring the knee pad, which is not the case in the centre of the upper side, because in the latter case, when bending the leg, the knee pad is pulled down by the shin guard, which obviously must be in place in front of the shin, and glide through the thigh. The result is uncomfortable for the cyclist. Instead, when anchoring the knee pad through the upper corners, or lateral topsides, it can slide above the lower part of the thigh.

The straps 7', 8' are elastic bands provided in its end near the leg P with pullers that allow comfortable fitting and fixing to the sleeve. In the embodiment shown, the fixing between the straps 7', 8' and the sleeve is made of Velcro™ 4b', 7^{a}'.

For the fixing between the straps 7', 8' and the knee pad, sets of pressure buttons are preferred, made of a male part 3a' and a female part 7a', coupling to each other. Using buttons for this connection takes advantage of the fact that the knee pad is rigid and thus is comfortable to press to make the connection. The combination of a button for the lower end with a Velcro™ at the upper end is ideal to allow the user a comfortable and optimal fit.

On the other hand, as shown in FIG. 11, the connections between the two straps 7', 8' and the sleeve 4' are arranged in the part of the sleeve 4' corresponding to the sides of the lower part of the thigh.

The articulated connection between the shin guard 2' and the knee pad 3' is formed by a pad 9 made of plastic material, depicted isolated in FIGS. 8' to 12'.

The articulated connection between the shin guard 2' and the knee pad 3' has a flexible tab joined 3b' by its lower part of the knee pad 3', being this flexible tab 3b' provided with joining means 3c' to the pad 9'.

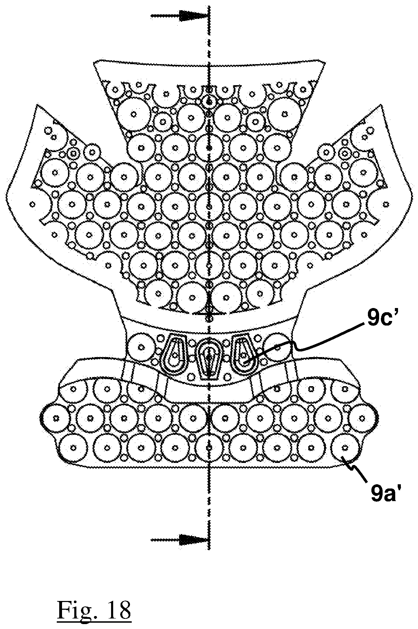

Next, with reference to Figures 18 to 22, the pad, which is considered an invention in itself, independently of the assembly described, will be described.

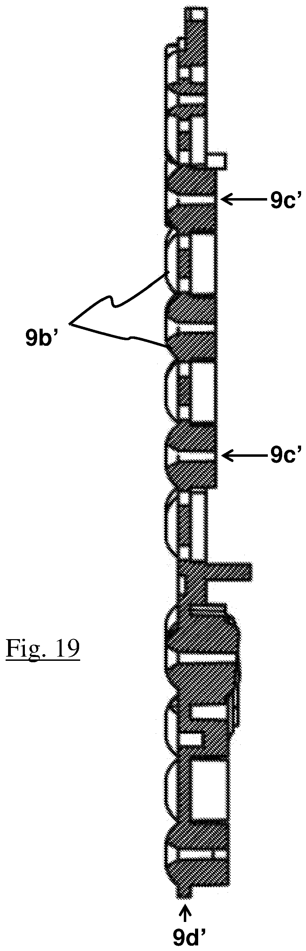

As shown in FIGS. 19 a 22, this pad is formed by a plastic sheet 9d' provided in one side with protrusions 9a' cylindrical or frusto-conical, in the opposite side with bumps 9b', the bumps 9b' and the protrusions 9a' are arranged coincidentally, such that its two ends are communicated through ventilation channels 9c'.

As shown for example in the section of FIG. 19, the inlet of the channels 9c' on the side of the bumps 9b' is widened. Thus, the support area on the skin is minimal, which allows optimum ventilation.

The sheet 9d' is provided with through holes 9e' in the zones devoid of protrusions 9a' and bumps 9b', so that the heat dissipation capacity of the protection is increased.

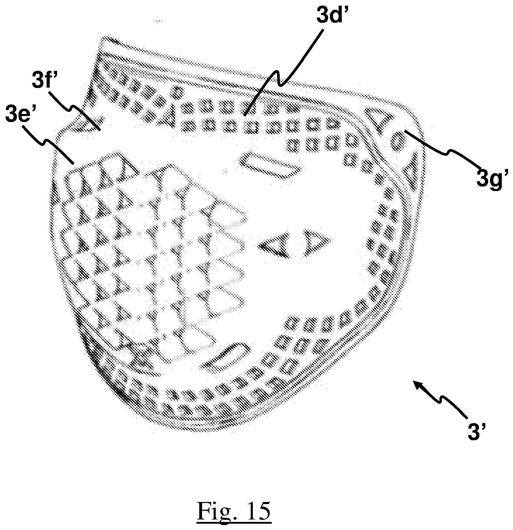

As it is known per se, and as shown in FIG. 15, the knee pad 3' comprises a body with a cap form provided with a peripheral support zone 3d' destined to be in contact with the zone of the leg which surrounds the knee, and a central zone 3e' arranged in front of the knee, wherein the central zone projects outwards, the transition zone being between both zones formed by a step 3f'.

However, the knee pad 3' is provided with ventilation openings, also thereby contributing to the dissipation of perspiration, and therefore to the cooling. Reducing resistance due to the presence of holes it is compensated by providing resistant ribs on the inner surface of the sleeve.

As shown in FIG. 15, the knee pad comprises in its lateral topsides ends tabs 3g' for connection to the straps 7', 8'.

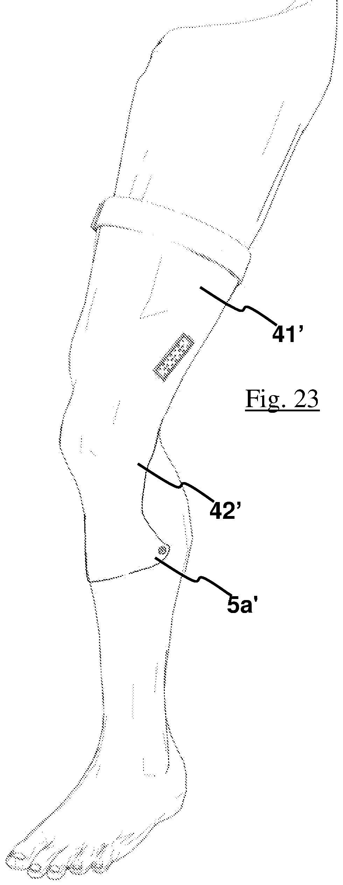

As shown in FIG. 23, the sleeve 4' is formed by a tubular part 41' and a lower extension 42' shaped as an inverted T, such that two fixing wings 5a' are configured on the shin guard 2'. In such a way, the upper part 41 'is the one that fits the entire periphery of the leg while the bottom 42' exposes the popliteal fossa, which is an area of heavy sweating, and therefore must be left exposed to the air.

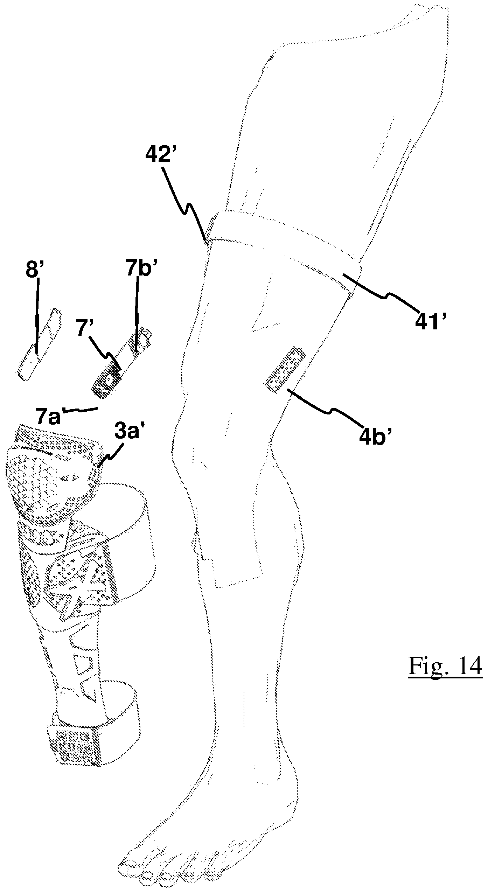

As shown in FIG. 14, the sleeve 4' comprises in the upper mouth and in the interior part thereof a non-slip strip 41' and adjusting means 42' of the strip 41' to the leg P.

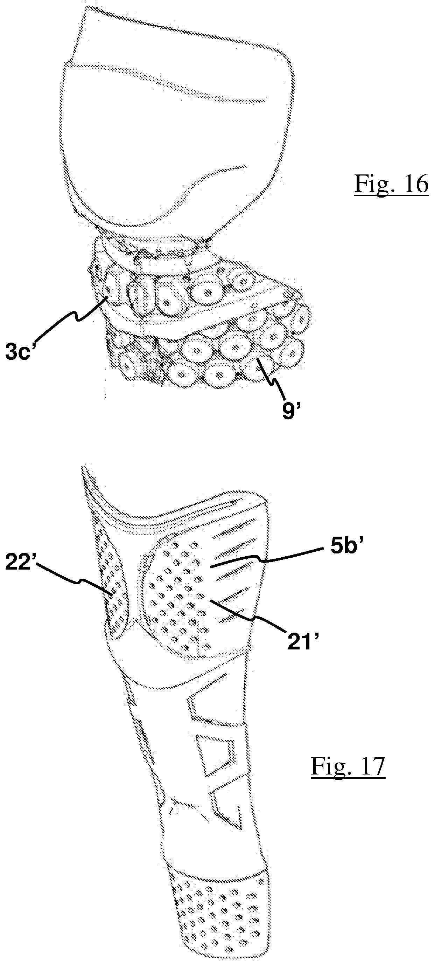

As shown in FIG. 17, the shin guard 2' is provided in its upper external part with two recesses 21', 22', wherein there are two Velcro™ surfaces for fixing the wings 5a' of the sleeve. The placement process is simple: the sleeve is placed, then the shin guard is placed against the shin, such that the lower end of the section 42' of the sleeve is trapped between the upper part of the shin and the knee pad. Then the wings 5a' are folded to take them to the recesses 21', 22'. Both parts are provided with Velcro™, so that the shin guard is positioned. Obviously, the union could also be performed with a snap button.

Then the belts 11 'and 12' are fitted, which also include Velcro™, for optimal fixation of the shin guard. These bands are preferably made of a breathable stretch fabric. It is anticipated that the straps are permanently attached to the shin guard by one side, and on the other side a pressure adjustment and fixation is performed. Another possibility, more modular and that allows its easy replacement, is that the bands are removably connected at both ends.

With regard to materials, below there is a non limiting selection offered merely by way of example:
Knee pad: Silicone with hardness comprised between 75 and 80 Shore A
Shin guard: transparent Polycarbonate
Velcro™ of polyethylene silicone .
Sleeve for the leg: 80% polyester with spandex.

Although reference has been made to particular embodiments of the invention, it is apparent to one skilled in the art that the protective element or set described are susceptible of numerous variations and modifications, and that all the details mentioned can be replaced by other technically equivalent, without departing from the scope of protection defined by the appended claims.

In particular, it is noted that the term "for" as used in the first claim highlights a preferred application of the invention to the shin, but not limited exclusively to this member, but through appropriate modifications, can also be used for the forearm.

## Claims

1. Protection element (1) for shin (2), comprising a protective body (3) having a C-shaped cross section destined to cover the shin (2) or the forearm, being defined in the protective body (3) three sections, a lower section (31) destined to be in the vicinity of the ankle, a central section (33) destined to face the shin and an upper section (32) destined to be placed below the knee, being the protective body (3) provided with a padded interior lining (41, 42) on the interior surface of the protective body (3), **characterised in that** the lining (41, 42) is formed by a first lining section (41) arranged in the lower section (31) and a second lining section (42) arranged in the upper section (32), being the central section (33) devoid of interior lining, such that the protective body (3) rests on the shin or forearm only in said lower section (31) and in said upper section (32) and wherein the protective body (3) is made of a transparent or translucent material.

2. Protection element according to claim 1, comprising an upper extension (5) articulated with the upper end of the protective body (3), having said extension the form of a spherical cap section destined to cover the knee.

3. Protection element according to any of the previous claims, wherein the protective body (3) comprises ventilation openings (6).

4. Protection element according to any of the previous claims, wherein the protective body (3) comprises at its corners openings for fixing by strips.

5. Protection element according to any of the previous claims, wherein the protective body (3) material is polyethylene.

6. Protection element according to any of the previous claims, wherein the lining (41, 42) is a cross-linked plastic material or a foam.

7. Protection element according to any of the previous claims, wherein the second lining section (42) is adhered by its surface opposite to the contact surface with the user to an elastic sheet (7) having an elastic constant lower than the lining (41, 42) and greater than the protective body (3) one, being this elastic sheet (7) joined to the protective body (3) by anchors (A) in the lower part and in the C-section ends, such that in distended conditions, there is a space (V) between the sheet and the protective body (3).

8. Protection set (1') for cyclists (P), comprising a shin guard (2'), wherein the shin guard is a protection element according to any of claims 1 to 7, a knee pad (3') and a sleeve (4') for the leg (P), being the shin guard (2') and the knee pad (3') joined and articulated therebetween, comprising joining means (5a', 5b') between the shin guard (2') and the sleeve (4') and joining means (6') between the knee pad (3') and the sleeve (4'), **characterised in that** the joining means (5a', 5b') between the shin guard (2') and the sleeve (4') and the joining means (6') between the knee pad (3') and the sleeve (4') are removable, and wherein the joining means (6') between the knee pad (3') and the sleeve (4') are at least two straps (7', 8') joined by one of its ends to the sleeve (4') and by the other one of its ends to the knee pad (3') and wherein the connection between the two straps (7', 8') and the knee pad (3') is arranged in the lateral topsides of the knee pad (3').

9. Set according to claim 8, wherein the connections between the two straps (7', 8') and the sleeve (4') are arranged in the part of the sleeve (4') corresponding to the sides of the lower part of the thigh.

10. Set according to any of claims 8 or 9, wherein the articulated connection between the shin guard (2') and the knee pad (3') is formed by a pad (9') made of plastic material, the articulated connection between the shin guard (2') and the knee pad (3') having a flexible tab (3b') joined by the lower part of the knee pad (3'), this flexible tab (3b') being provided with joining means (3c') to the pad (9').

11. Set according to claim 10, wherein the pad is formed by a plastic sheet (9d') provided in one side with cylindrical or frustoconical protrusions (9a'), in the opposite side with bumps (9b'), being the bumps (9b') and the protrusions (9a') arranged coincidentally, such that its two ends are communicated through ventilation channels (9c').

12. Set according to claim 11, wherein the sheet (9d') is provided with through holes (9e') in the zones without protrusions (9a') and bumps (9b').

13. Set according to any of claims 8 to 12, wherein the sleeve (4') is formed by a tubular part (41') and a lower extension (42') shaped as an inverted T, such that two fixing wings are configured on the shin guard (2').

14. Set according to any of claims 8 to 12, comprising in the upper mouth of the sleeve (4') and in the interior part thereof a non-slip strip (41') and adjusting means (42') of the strip (41') to the leg (P).

## Patentansprüche

1. Schutzelement (1) für das Schienbein (2), umfassend einen Schutzkörper (3) mit einem C-förmigen Querschnitt, der dazu bestimmt ist, das Schienbein (2) oder den Unterarm zu bedecken, mit drei im Schutzkörper (3) definierten Abschnitten, einen unteren Abschnitt (31), der dazu bestimmt ist sich in der Nähe des Knöchels zu befinden, einen mittleren Abschnitt (33), der dazu bestimmt ist, dem Schienbein zugewandt zu sein, und einen oberen Abschnitt (32), der dazu bestimmt ist, unterhalb des Knies angeordnet zu werden, wobei der Schutzkörper (3) mit einer gepolsterten Innenauskleidung (41,42) auf der Innenfläche des Schutzkörpers (3) versehen ist, **dadurch gekennzeichnet, dass** die Auskleidung (41,42) durch einen ersten Auskleidungsabschnitt (41) gebildet ist, der im unteren Abschnitt (31) angeordnet ist, und einen zweiten Auskleidungsabschnitt (42), der im oberen Abschnitt (32) angeordnet ist, wobei der zentrale Abschnitt (33) ohne Innenauskleidung ist, so dass der Schutzkörper (3) nur in dem unteren Abschnitt (31) und in dem oberen Abschnitt (32) auf dem Schienbein oder Unterarm aufliegt, und wobei der Schutzkörper (3) aus einem transparenten oder durchscheinenden Material hergestellt ist.

2. Schutzelement nach Anspruch 1, umfassend eine obere Verlängerung (5), die gelenkig mit dem oberen Ende des Schutzkörpers (3) verbunden ist, wobei diese Verlängerung die Form eines kugelförmigen Koppenabschnitts hat, der dazu bestimmt ist, das Knie zu bedecken.

3. Schutzelement nach einem der vorhergehenden Ansprüche, wobei der schützende Körper (3) Lüftungsöffnungen (6) umfasst.

4. Schutzelement nach einem der vorstehenden Ansprüche, wobei der Schutzkörper (3) an seinen Ecken Öffnungen zur Befestigung durch Streifen aufweist.

5. Schutzelement nach einem der vorhergehenden Ansprüche, wobei das Material des Schutzkörpers (3) Polyethylen ist.

6. Schutzelement nach einem der vorhergehenden Ansprüche, wobei die Auskleidung (41,42) ein vernetztes Kunststoffmaterial oder ein Schaumstoff ist.

7. Schutzelement nach einem der vorhergehenden Ansprüche, wobei der zweite Auskleidungsabschnitt (42) mit seiner Oberfläche, die der Kontaktfläche mit dem Benutzer gegenüberliegt, an eine elastische Folie (7) geklebt ist, die eine Elastizitätskonstante hat, die niedriger als die der Auskleidung (41,42) und größer als die des Schutzkörpers (3) ist, wobei diese elastische Folie (7) mit dem Schutzkörper (3) durch Verankerungen (A) im unteren Teil und in den Enden des C-Abschnitts verbunden ist, so dass in gedehnten Zuständen ein Raum (V) zwischen der Folie und dem Schutzkörper (3) vorhanden ist.

8. Schutzset (1') für Radfahrer (P), umfassend einen Schienbeinschutz (2'), wobei der Schienbeinschutz ist ein Schutzelement nach einem der Ansprüche 1 bis 7 ist, einen Knieschützer (3') und eine Hülse (4') für das Bein (P), wobei der Schienbeinschützer (2') und der Knieschützer (3') verbunden und gelenkig gelagert sind, umfassend Verbindungsmittel (5a', 5b') zwischen dem Schienbeinschützer (2') und der Hülse (4') und Verbindungsmittel (6') zwischen dem Knieschützer (3') und der Hülse (4'), **dadurch gekennzeichnet, dass** die Verbindungsmittel (5a', 5b') zwischen dem Schienbeinschützer (2') und dem Hülse (4') und die Verbindungsmittel (6') zwischen dem Knieschützer (3') und der Hülse (4') abnehmbar sind, und wobei die Verbindungsmittel (6') zwischen dem Knieschützer (3') und der Hülse (4') mindestens zwei Bänder (7', 8') sind, die mit einem ihrer Enden mit der Hülse (4') und mit dem anderen ihrer Enden mit dem Knieschützer (3') verbunden sind, und wobei die Verbindung zwischen den beiden Gurten (7', 8') und der Kniepolster (3') in der seitlichen Oberseite des Knieschützers (3') angeordnet ist.

9. Set nach Anspruch 8, wobei die Verbindungen zwischen den beiden Gurten (7', 8') und der Hülse (4') in dem Teil der Hülse (4') angeordnet sind, der den Seiten von dem unteren Teil des Oberschenkels entspricht.

10. Set nach einem der Ansprüche 8 oder 9 , wobei die gelenkige Verbindung zwischen dem Schienbeinschutz (2') und dem Kniepolster (3') durch ein Polster (9') aus einem Kunststoffmaterial gebildet ist, wobei die gelenkige Verbindung zwischen dem Schienbeinschutz (2') und dem Kniepolster (3') eine flexible Lasche (3b') hat, die mit dem unteren Teil des Knieschutzes (3') verbunden ist, wobei diese flexible Lasche (3b') mit Verbindungsmitteln (3c') zum Polster (9') versehen ist.

11. Set nach Anspruch 10, wobei das Polster aus einer Kunststoffplatte (9d') gebildet ist, die auf einer Seite mit zylindrischen oder kegelstumpfförmigen Vorsprüngen (9a') und auf der gegenüberliegenden Seite mit Erhebungen (9b') versehen ist, wobei die Erhebungen (9b') und die Vorsprünge (9a') zusammenfallend angeordnet sind, so dass ihre beiden Enden durch Lüftungskanäle (9c') miteinander verbunden sind.

12. Set nach Anspruch 11, wobei die Platte (9d') in den Zonen ohne Vorsprünge (9a') und Unebenheiten (9b') mit Durchgangslöchern (9e') versehen ist.
In den Zonen ohne Vorsprünge (9a') und Unebenheiten (9b').

13. Set nach einem der Ansprüche 8 bis 12, wobei die Hülse (4') aus einem rohrförmigen Teil (41') und einer unteren Verlängerung (42') in Form eines umgekehrten T gebildet ist, so dass zwei Befestigungsflügel an den Schienbeinschützern (2)' ausgebildet sind.

14. Set nach einem der Ansprüche 8 bis 12, umfassend in der oberen Öffnung der Hülse (4') und in deren Innenteil, Einstellmittel (42') des Streifens (41') zum Bein (P).

## Revendications

1. Élément de protection (1) pour un tibia (2), comprenant un corps de protection (3) présentant une coupe transversale en forme de C destiné à couvrir le tibia (2) ou l'avant-bras, trois sections étant définies dans le corps de protection (3), une section inférieure (31) destinée à se trouver à proximité de la cheville, une section centrale (33) destinée à faire face au tibia et une section supérieure (32) destinée à être placée en dessous du genou, le corps de protection (3) étant pourvu d'une garniture intérieure rembourrée (41, 42) sur la surface intérieure du corps de protection (3), **caractérisé en ce que** la garniture (41, 42) est formée par une première section de garniture (41) agencée dans la section inférieure (31) et une deuxième section de garniture (42) agencée dans la section supérieure (32), la section centrale (33) étant dénuée de garniture intérieure, de sorte que le corps de protection (3) repose sur le tibia ou l'avant-bras uniquement au niveau de ladite section inférieure (31) et de ladite section supérieure (32) et dans lequel le corps de protection (3) est fait d'un matériau translucide ou transparent.

2. Élément de protection selon la revendication 1, comprenant une extension supérieure (5) articulée avec l'extrémité supérieure du corps de protection (3), ladite extension ayant la forme d'une section de coiffe sphérique destinée à couvrir le genou.

3. Élément de protection selon l'une quelconque des revendications précédentes, dans lequel le corps de protection (3) comprend des ouvertures de ventilation (6).

4. Élément de protection selon l'une quelconque des revendications précédentes, dans lequel le corps de protection (3) comprend des ouvertures au niveau de ses coins pour des bandes de fixation.

5. Élément de protection selon l'une quelconque des revendications précédentes, dans lequel le matériau du corps de protection (3) est du polyéthylène.

6. Élément de protection selon l'une quelconque des revendications précédentes, dans lequel la garniture (41, 42) est une mousse ou un matériau plastique réticulé.

7. Élément de protection selon l'une quelconque des revendications précédentes, dans lequel la deuxième section de garniture (2) est collée par sa surface opposée à la surface de contact avec l'utilisateur à une feuille élastique (7) présentant une constante élastique inférieure à celle de la garniture (41, 42) et supérieure à celle du corps de protection (3), cette feuille élastique (7) étant assemblée au corps de protection (3) par des ancrages (A) dans la partie inférieure et dans les extrémités à section en C, de telle sorte que dans des conditions distendues, il y a un espace (V) entre la feuille et le corps de protection (3).

8. Ensemble de protection (1') pour cyclistes (P), comprenant un protège-tibia (2'), dans lequel le protège-tibia est un élément de protection selon l'une quelconque des revendications 1 à 7, une genouillère (3') et un manchon (4') pour la jambe (P), le protège-tibia (2') et la genouillère (3') étant assemblés et articulés entre eux, comprenant des moyens d'assemblage (5a', 5b') entre le protège-tibia (2') et le manchon (4') et des moyens d'assemblage (6') entre la genouillère (3') et le manchon (4'), **caractérisé en ce que** les moyens d'assemblage (5a', 5b') entre le protège-tibia (2') et le manchon (4') et les moyens d'assemblage (6') entre la genouillère (3') et le manchon (4') sont amovibles, et dans lequel les moyens d'assemblage (6') entre la genouillère (3') et le manchon (4') sont au moins deux bandes (7', 8') assemblées par l'une de leurs extrémités au manchon (4') et par l'autre de leurs extrémités à la genouillère (3') et dans lequel la connexion entre les deux bandes (7', 8') et la genouillère (3') est agencée dans les côtés supérieurs latéraux de la genouillère (3').

9. Ensemble selon la revendication 8, dans lequel les connexions entre les deux bandes (7', 8') et le manchon (4') sont agencées dans la partie du manchon (4') correspondant aux côtés de la partie inférieure de la cuisse.

10. Ensemble selon l'une quelconque des revendications 8 ou 9, dans lequel la connexion articulée entre le protège-tibia (2') et la genouillère (3') est formée par un coussinet (9') fait d'un matériau plastique, la connexion articulée entre le protège-tibia (2') et la genouillère (3') présentant une languette flexible (3b') jointe par la partie inférieure de la genouillère (3'), cette languette flexible (3b') étant pourvue de moyens d'assemblage (3c') au coussinet (9').

11. Ensemble selon la revendication 10, dans lequel le coussinet est formé d'une feuille plastique (9d') pourvue sur un côté de saillies cylindriques ou tronconiques (9a'), et sur le côté opposé de bosses (9b'), les bosses (9b') et les saillies (9a') étant agencées de manière coïncidente, de telle sorte que leurs deux extrémités communiquent à travers des canaux de ventilation (9c').

12. Ensemble selon la revendication 11, dans lequel la feuille (9d') est pourvue de trous traversants (9e') dans les zones sans saillies (9a') et bosses (9b').

13. Ensemble selon l'une quelconque des revendications 8 à 12, dans lequel le manchon (4') est formé par une partie tubulaire (41') et une extension inférieure (42') en forme de T inversé, de telle sorte que deux pattes de fixation sont configurées sur le protège-tibia (2').

14. Ensemble selon l'une quelconque des revendications 8 à 12, comprenant dans l'ouverture supérieure du manchon (4') et dans la partie intérieure de celui-ci une bande antidérapante (41') et des moyens d'ajustement (42') de la bande (41') sur la jambe (P).
